# EUROPEAN PATENT APPLICATION

(11) **EP 2 110 786 A1**
(43) Date of publication of application: **21.10.2009**
(21) Application number: 08300179.2
(22) Date of filing: 15.04.2008
(51) Int. Cl.: G06Q 50/00

(54) **Method of displaying market data when applying a mark-up to net fares**

(71) Applicant: AMADEUS sas, 06410 Biot (FR)
(72) Inventor: Ansquer, Isabelle, 06650 Le Rouret (FR); Massa, Christian, 06200 Nice (FR)
(74) Representative: Decobert, Jean-Pascal

(57) **Abstract**

A method of applying a mark-up to net fares from agency selling records received by a selling updater is described. Upon request of the selling updater the method includes enabling the display of market data corresponding to the agency selling records. The display of market data includes first requesting a list of city pairs to be built on the basis of default search. The city pairs matching the default search criteria are then retrieved from a fares database and returned to the selling updater. After the selling updater has selected some or all city pairs, a list of net fares is further requested and retrieved from the fares database. Rule records for the retrieved net fares are also retrieved from a rules database. Net fares and rule records are associated and returned to the selling updater to be further associated with each matching item of the agency selling record.

The method allows the display of the requested market data and permits the selling updater to decide on what mark-up to apply on the net fare.

## Description

### FIELD OF THE INVENTION

The present invention relates generally to the publishing and distribution of air fares and more specifically to a method to mark-up negotiated fares.

### BACKGROUND OF THE INVENTION

The airline tariff publishing company (ATPCO) is an organization owned by a number of domestic and international airlines that collects and distributes the latest airfares of most airlines around the world on a multi-daily basis. ATPCO provides fare data in an electronic form suitable for computer processing including all the rules associated with those fares. Fares and rules provided by airlines and coded by ATPCO are electronically transmitted to the affiliated companies including the global distribution systems or GDSs that serve all the actors of the travel industry around the world and more specifically airlines and travel agencies. Such a GDS is for example AMADEUS, a European travel service provider with headquarters in Madrid, Spain.

An airline fare received from ATPCO includes among other things:
- A fare record which consists of an origin and destination, a fare amount, a routing number...
- The rules governing the restrictions applicable to a fare such as minimum/maximum stay, day of the week (ATPCO record 1, record 2, record 3, etc.).
- Any additional rule restrictions specific to the fare and referred to as footnotes.
- The general rules, i.e., the additional rule restrictions applicable to many fares.
- A routing map including the allowable cities between the origin and destination.

A fare distributed by ATPCO belongs to one of the following types:
- A public fare, i.e., a fare filed by an airline at a published tariff, also known as a published fare. This type of fares is distributed to all GDSs.
- A private fare is a fare filed by an airline with limited use. It is generally a 'selling fare' with no updates or redistribution permitted by sellers. A private fare is distributed to selected GDSs and secured under ATPCO category 15 (CAT 15) rules.
- A negotiated fare is a subset of a private fare with limited distribution and conditions unique to the seller. They are distributed using ATPCO negotiated fares rule category 35 (CAT 35).
- A net fare is the net amount due to the airline from the seller.
- A sell fare is the fare amount the passenger pays to the seller. It is obtained by adding an amount or percentage, i.e., a mark-up, to the corresponding net fare.

Since their introduction by ATPCO as an integral part of their automated process to collect and distribute fares and fare-related data, negotiated fares have been largely adopted by airlines and travel service providers. They now represent a very significant part of all fares produced by airlines.

It is worth noting here that ATPCO is not actually the only provider of negotiated fares. Airfare providers like consolidators may use their own tools and means (software tools and specialized graphic user interfaces) to create and distribute negotiated fares directly to the GDSs. GDSs themselves have possibly their own proprietary tools to let third party airfare providers create negotiated fares too. However, whichever channel is actually used to create and distribute negotiated fares, their structure still adhere in all cases to the fares and rules structure set by ATPCO even though the electronic distribution process can possibly take other forms such as of being distributed in the form of XML (extended markup language) files to the GDSs.

In a very competitive environment, airlines must reduce their operating costs to stay profitable or just to survive. To help achieving this objective all major airlines have among other things drastically reduced the commissions paid to travel agencies when they are not already practicing a 'zero based travel agency commission' policy. While travel agencies have long been used to rely only on commissions paid by airlines on each sold ticket to secure a significant part of their gross income, they have now to find new sources of revenue. To this end, negotiated fares, i.e.: ATPCO category 35 fares are convenient both to airlines and sellers of airline tickets such as the travel agencies. Indeed they allow the airlines to sell their seat inventory at guaranteed net amounts through an automated and secured single point of distribution (ATPCO), and possibly, as noted above, through third parties or consolidators buying tickets in bulk. Even though negotiated fares are lower than published fares they contribute to secure airlines revenues. Also, the use of negotiated fares let seller add a mark-up to the net amount due to the airline or fare provider so that travel agency businesses can remain profitable. Although sell fares are thus higher than net fares they remain generally below the published fares publicly advertised thus are still competitive for the end-customer.

Hence, if negotiated fares are commercially attractive both to airlines and travel agencies it remains that the establishment of air fares in general is a very complex matter subject to the application of a plethora of rules to obtain a validated fare. At this point of view, the introduction of negotiated fares by ATPCO has not eased whatsoever this problem since the rules attached to those fares (not publicly advertised) become specific to a seller: a consolidator, a travel service provider, a network of travel agencies or a specific branch office. Because all have then the freedom of adding their own mark-ups and restrictions that must however still comply with the rules attached to the net fares by their issuers, e.g., the airlines, this further contributes to the complexity of the overall fare generation process.

While the distribution of airline fares has been gradually automated over the years, following the development of the commercial aviation, the complexity of the fare structure put in place by ATPCO still renders full automation difficult. In the field of negotiated fares the mark-up of net fares by the sellers remains problematic essentially because the fare amounts and all the rules attached to the fares originally issued by the airlines dispersed in various data entities (records, tables, etc.) are not readily made available to them at that time. Sellers have then generally to go through a cut-and-try process, e.g., using a fare quote application, to check and determine what level of mark-up is acceptable over the net fares.

It is therefore a general object of the invention to further automate and simplify the issuance of selling fares. In particular, it is an object of the invention to permit sellers, when adding a mark-up and, possibly, further restrictions to the net fares (i.e., ATPCO category 35 fares ), to acquire a full knowledge of all the data originally attached to them by their issuers (e.g., the airlines) so that sellers (e.g., the travel agencies) can make informed decisions on the level of the mark-ups to apply and on the possible further restrictions to attach to their final selling fares, i.e., the fares paid by the customers.

Further objects, features and advantages of the present invention will become apparent to the ones skilled in the art upon examination of the following description in reference to the accompanying drawings. It is intended that any additional advantages be incorporated herein.

### SUMMARY OF THE INVENTION

The invention describes a method of applying a mark-up to a net fare from an agency selling record received by a selling updater, and referring to the net fare. Upon request of the selling updater the method includes enabling the display of market data corresponding to the agency selling record. The display of market data includes first requesting a list of city pairs to be built on the basis of default search criteria. The city pairs matching the default search criteria are then retrieved from a fares database and returned to the selling updater. After the selling updater has selected some or all city pairs of the list a list of net fares is further requested then retrieved from the fares database. Rule records for the retrieved net fares are also retrieved from a rules database. Retrieved net fares and rule records are associated and returned to the selling updater to be further associated with each matching item of the agency selling record.

The invention also describes a client application to mark-up and distribute net fares including a graphical user interface (GUI), wherein the GUI is adapted to allow an end-user of the client system to request a display of market data corresponding to an agency selling record; the GUI further including: means adapted for first requesting a display of a list of city pairs; means adapted for selecting some or all city pairs of the list; means adapted for further requesting a display of a list of net fares; and, means adapted for further filtering the display of the list of net fares.

### BRIEF DESCRIPTION OF THE DRAWINGS

FIG. 1 describes the life cycle of a negotiated fare.
FIG. 2 describes the overall environment in which the invention is operated.
FIG. 3 further discusses the problem solved by the invention.
FIG. 4 shows the steps of the method to retrieve the market data corresponding to a selling fare.
FIG. 5a to 5e further describe the steps of the method to retrieve the market data.
FIG. 6 shows exemplary windows displayed by the client application of the mark-up and distribution module.

### DETAILED DESCRIPTION

The following detailed description of the invention refers to the accompanying drawings. While the description includes exemplary embodiments, other embodiments are possible, and changes may be made to the embodiments described without departing from the spirit and scope of the invention.

In the following detailed description of the invention the term 'net fare' broadly refers to the category of fares that are negotiated between airlines and other fare providers and a particular distribution channel. For this category of air fares, end-sellers are authorized to add a mark-up so that the sale amount is higher than the net amount due to the fare provider.

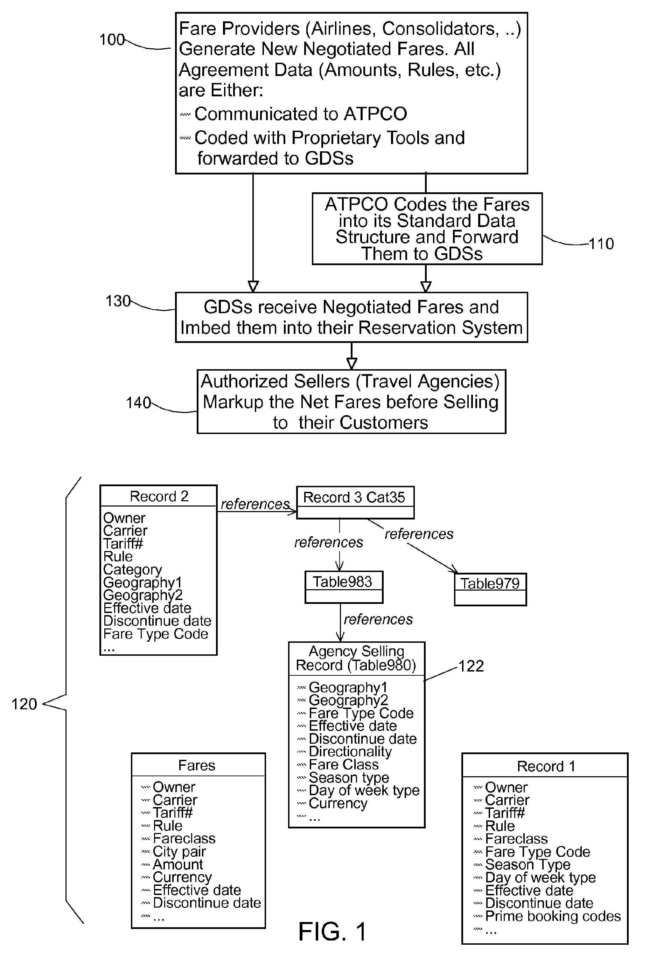

FIG. 1 describes the life cycle of a negotiated fare.

Fares are generated by airlines (100) and other fare providers. A negotiated fare results of an agreement between a fare provider and a particular distributor, e.g., a network of travel agencies or even a particular branch office. A fare provider can be a consolidator, i.e., any travel service business buying seats from airlines in bulk. The terms and conditions of the agreement translates in amounts and rules attached to the negotiated fare which are either communicated to ATPCO which acts as a point of distribution for the fares published by most airlines in the world or possibly coded with proprietary tools and forwarded directly to GDDs. Also, GDSs may have their own tools to let third party fare providers code their negotiated fare.

ATPCO codes (110) all the communicated information in its standard data structure made of numerous records and tables, a simplified example of which is shown (120). This includes an 'agency selling record' or 'table 980' (122) which is mainly destined to the travel agencies in charge of selling the corresponding fare. If coded through an alternate channel (115) the fare data structure used still adhere to the data structure set by ATPCO (120) though.

Once coded, the fare information is electronically transmitted to the GDSs (130). Transmission by ATPCO of the new coded fares occurs on a multi-daily basis so that new fares can be used immediately. This includes the negotiated fares or category 35 fares to which the invention apply. They are imbedded by GDSs into their reservation system so that their affiliated travel agencies can start using them. Obviously, since category 35 fares result of an agreement between an airline or an alternate fare provider and a particular distributor only the agencies of the distribution channel are authorized to use them. They are thus allowed to mark-up the net fares (140) before starting to actually offer and sell the corresponding fares to their customers.

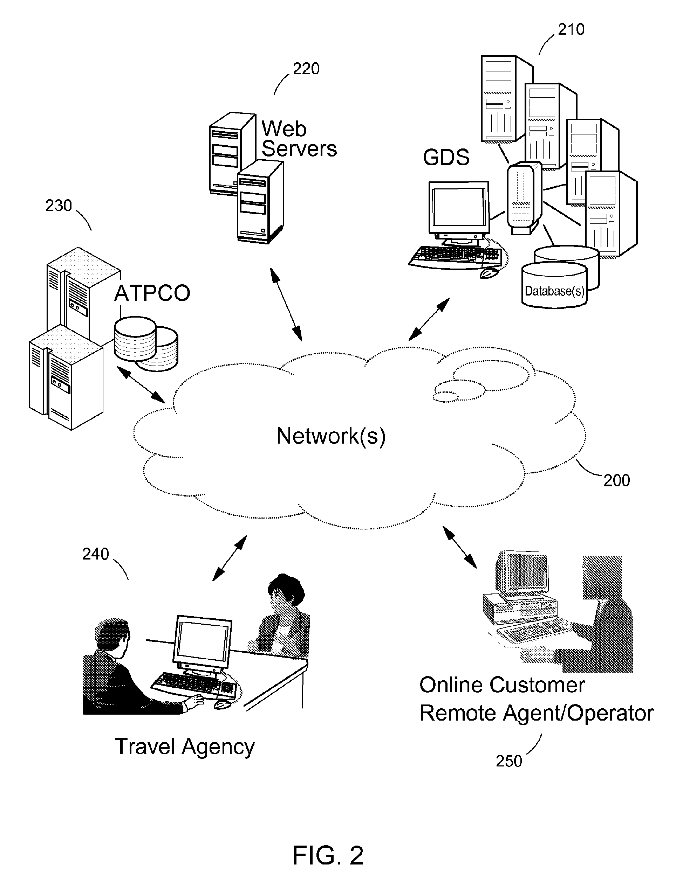

FIG. 2 describes the overall environment in which the invention is operated.

The publishing and distribution of the air fares generated by the airlines and other fare providers is done in a highly computerized and networking environment. Data exchanges between the various parties involved are possibly achieved by enabling all modern standard communication means and protocols over any combination of private and public networks (200) including what is broadly referred to as the Internet.

GDSs are setting up large computing and storing resources (210) to serve their affiliated customers including the traditional travel agencies (240). Travel agencies are either individual travel agencies or branch offices of larger travel service providers that however all use, directly or through their headquarter computing resources, the booking, reservation and pricing tools (fare quote) of the GDS(s) to which they are affiliated.

As already discussed in the background section ATPCO is the main point of distribution for the fares generated by most of the airlines in the world. ATPCO also implements large computerized and communication means (230) to be able of handling the new fares that are constantly generated by the airlines along with their distribution to the GDSs.

All the travel service providers and other participants to the distribution of fares (i.e., airlines, consolidators, etc.) also generally carry out their own computing resources often under the form of large travel sites possibly serving individual customers and that can be also remotely controlled by authorized agents and operators (250). Those sites, essentially using the most spread application of the Internet, i.e., the world-wide-web or web, set up web servers (220) that are made remotely accessible through the Internet to customers and agents (250) using any of the available web navigator or browser, the standard web client application, on their personal computer or terminal equipment.

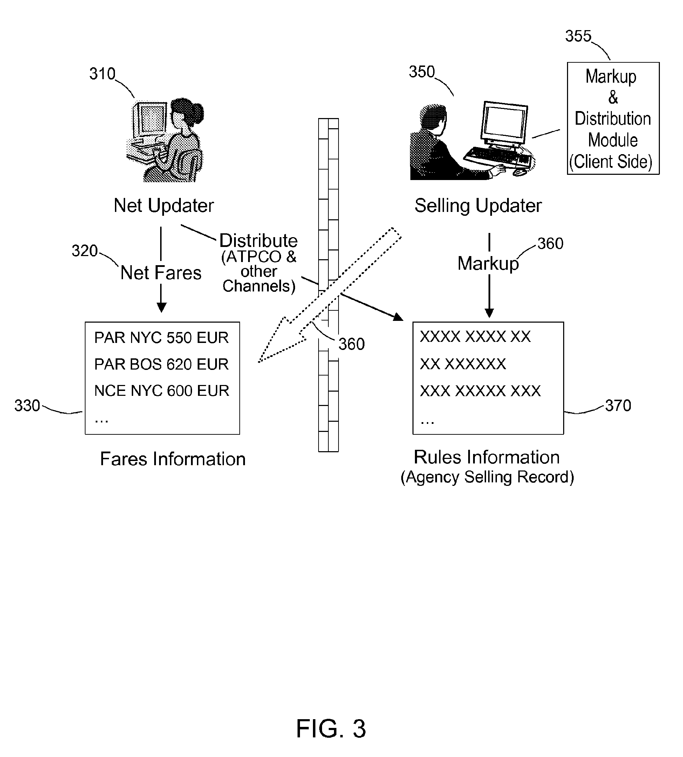

FIG. 3 further discusses the problem solved by the invention.

The negotiated fares are created under the form of net fares (320) by a net updater, e.g., an authorized agent of an airline company or fare provider (310). Net fares include the fares information (330) and distribution restrictions so that only those of the sellers concerned by the negotiated agreement receive the net fares. As already discussed, airline fares are mainly distributed through ATPCO. Other distribution channels exist including the possibility to file directly into the GDS system.

The selling updater (350) is an authorized agent, e.g., at headquarter of a large travel service provider using the resources and services provided by the GDS to which they are affiliated. Agent is responsible to mark-up (360) the distributed net fares for all the affiliated individual travel agencies and branch offices which are going to propose the fare at a higher sell price to their customers.

To do so, the selling updater who receives a new net fare in the form of an agency selling record (also called table 980) previously shown in FIG. 1, is however only made aware of the rules information (370) attached to the new fare by the net updater. Selling updater has no other knowledge of the fares generated by the net updater that were negotiated between an airline or a fare provider and the particular distribution channel considered (other than the documents possibly exchanged while the agreement was discussed and that the selling updater may have keep track of: paper documents, faxes, E-mails, etc). Indeed, ATPCO data structure has two distinct domains: the fares and the rules which are associated thanks to a rule number. However, a single rule number can be referenced by thousands of fares.

It is thus the purpose of the invention to retrieve (360) from the appropriate ATPCO records that are transmitted and updated in the GDS computing resources on a multi-daily basis the fares information (330), i.e., the market data corresponding to the new or updated net fares.

Knowing the market for which fare was generated, and all the rules attached to it by the net updater, the selling updater (350) is then in a much better position to mark-up the received net fares. Especially, the selling updater has not to go through a cut-and-try process to obtain the selling price.

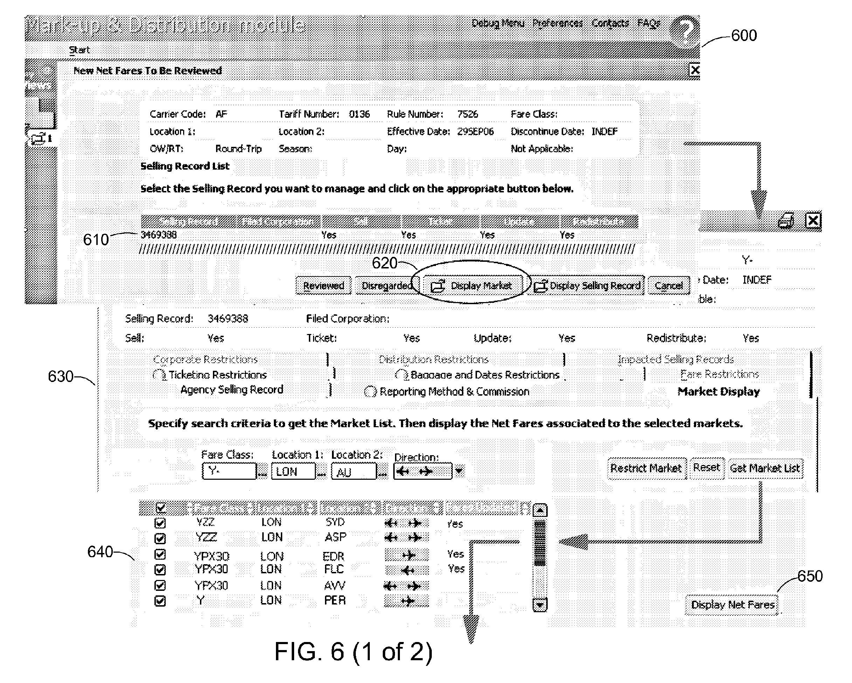

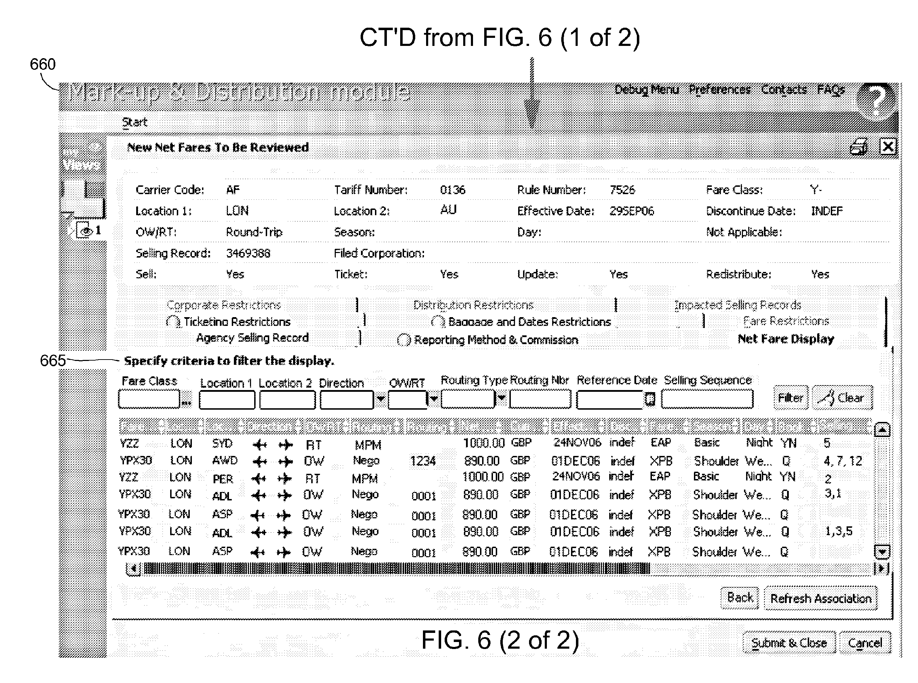

In a typical implementation of the invention the selling updater is running the client side of a mark-up & distribution software module (355) whose server side is run either directly from a GDS (210) or a separate server (220) in a computing and networking environment as shown in FIG. 2. The market display function giving access to the market data is part of the mark-up and distribution software module which is enabled through a standard graphic user interface (GUI) whose exemplary windows are shown in FIG. 6.

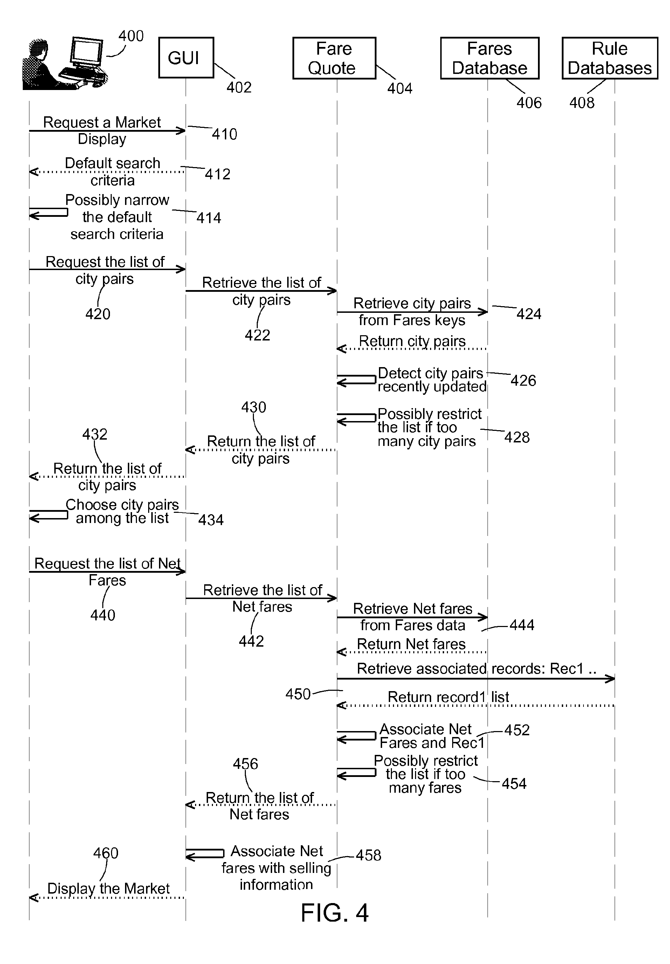

FIG.4 shows the steps of the method to retrieve the market data corresponding to a net fare.

Through the GUI (402) of the mark-up and distribution client application shown in FIG. 3 a selling updater (400) can thus mark-up and update the net fares and distribute the selling amounts to the selling points of which updater is in charge. The market display function is a help to the selling updater as it can show the net fares forwarded by the net updater on the basis of the sequence number of the agency selling record associated with each net fare. Invoking the market display function is done on demand by the selling updater. The request (410) is processed immediately by the mark-up and distribution application however in two steps, as further discussed in the following, to be able to handle the large amounts of data that the request may potentially involve. No batch or deferred process is needed though.

In response to the market display request (410) the selling updater is proposed a set of default search criteria (412) that are possibly narrowed to further reduce the amount of data to be retrieved (414). They are based on the restrictions already filled by the net updater in the corresponding records of the ATPCO data structure (i.e., record 2, table 979). Criteria include fare class, geography (locations 1 and 2) and directionality.

Then, the selling updater can request (420) the whole list of markets, i.e., the city pairs involved (those for which a fare record has been created). The request to retrieve the list of city pairs (422) is handled by the standard fare quote system of the GDS (404). The city pairs are retrieved from the GDS fares database (406) on the basis of the fares keys (424) and filtered according to the criteria selected at previous step (414). Fare quote detects the city pairs that have been recently updated (426). Fare quote system possibly restricts the list of city pairs (428) before returning it to the selling updater (430) if too many of them have to be displayed.

Once the list is viewable on the GUI (432) the selling updater can then perform a choice of city pairs (434) for which the net fares are eventually requested (440). The request to retrieve the corresponding net fares are forwarded (442) to the GDS fare quote system (404) which retrieves them from the fares database (444).

When the fare quote system has got the net fares it must also retrieves (450) the corresponding rules that were attached by the net updater, i.e., the corresponding ATPCO records (Record 1) from the rules database (408) so that net fares and ATPCO records can be associated (452). Also the list is restricted if too many net fares have been retrieved before it is returned to the GUI (456).

Finally, on the client side of the mark-up and distribution module each net fare is associated with the items of the agency selling record (table 980) that match the fare (458). The items include: geography, directionality, fare class, day of week, effective date, discontinue date, etc. Once done, the market data associated to the agency selling record are displayed to the selling updater (460). In the market display interface net fares with no selling amount yet specified are highlighted and are thus easily identifiable. Also, the net fares having had some of their characteristics changed since the last update of the agency selling record are highlighted too. Moreover, pieces of information associated to the net fare in the record 1 are also displayed, including: fare type code, season type, day of week and prime booking codes. Finally, the market display interface permits the user to restrict the view on specific geographic zones and fare classes.

Thus, obtaining a comprehensive market display, the selling updater is in a position to enter in the agency selling record a selling amount well adapted to the city pairs and market considered. The selling amount can be obtained, e.g., by adding a fixed amount or a percentage to the net fare amount while specifying other constraints such as a passenger type code (PTC) or a validity period.

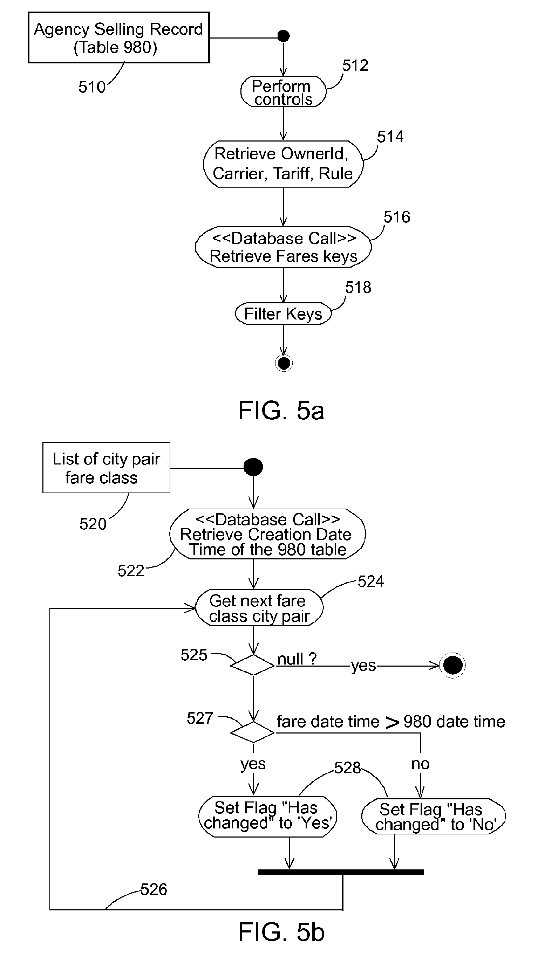

FIG. 5a to 5e further describe the steps of the method to retrieve the market data.

FIG. 5a shows the different steps followed by the process that retrieves the list of city pairs associated to the owner, carrier, tariff number and rule matching with the geography and fare class specified in the search criteria. The process starts (510) from an agency selling record, i.e., a table 980.

Controls are first performed (512) to check the consistency of the possible changes made by the selling updater to narrow the search criteria. On the basis of the ID of the table 980, the owner ID, the carrier, the tariff number and the rule can then be easily retrieved (514) from background data stored in the client environment.

The owner ID, carrier, tariff number and rule are used as entry keys to the fares database to retrieve the list of fare class and city pairs (516). Those matching the fare class and the geographic search criteria are further filtered (518). The update date time of each city pair fare class is also retrieved in order to detect those that have been modified since the last update of the table 980.

FIG. 5b shows how city pairs candidate for update are detected.

This process detects, for each fare class city pair (524), if it has been updated after the last update of the table 980 currently in use (527). The process is preferably executed on the server side of the application after the list of city pairs fare class and the creation date and time of the table 980 have been retrieved (520, 522). The process loops (526) until all city pairs have been gone through (525). A flag indicating that fare has changed since table was created is set accordingly (528).

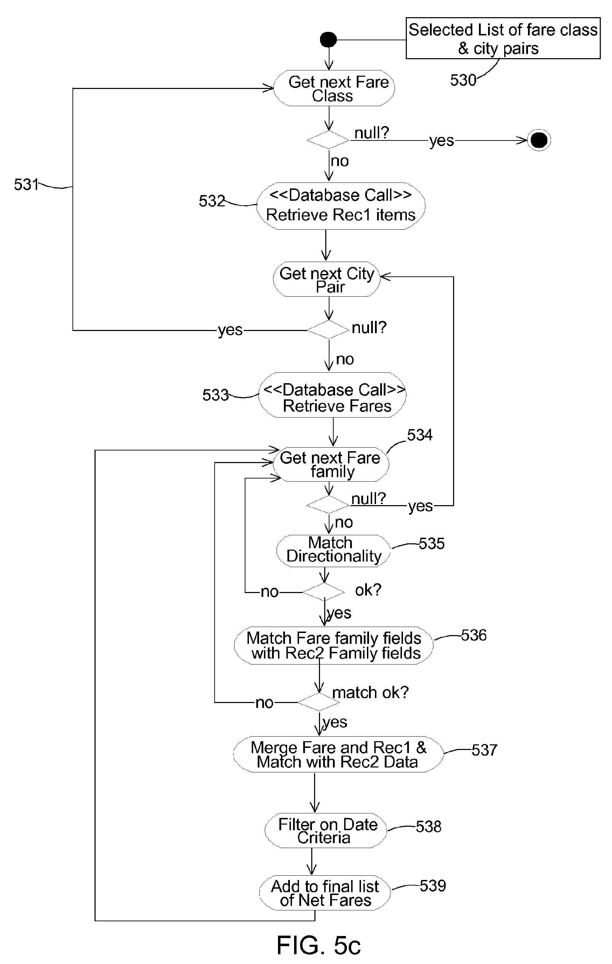

FIG 5c describes the process that retrieves the matching net fares for the selected list of city pairs.

The process starts from the list of fare class and city pairs selected by the net updater (530). It loops (531) until all fare class and city pairs have been gone through. Purpose of the loop is to retrieve (532) the record 1 data associated to the owner ID, carrier, tariff number, rule fare class, etc. A record 1 includes items such as: two locations (loc1 and loc2, e.g., a departure and an arrival city or other geographies), routing information (one-way, stop-over), some dates (effective and discontinue dates), fare type code, season type, day of week, etc.

For each loop (531) the matching fares are retrieved (533) from the fares database shown in FIG. 4 until all fare families (identified by currency codes) are gone through (534). Directionality (535) and fare family fields (536) are matched against record 2 family fields including: directionality, one-way/return, footnote 1 and 2, routing, currency.

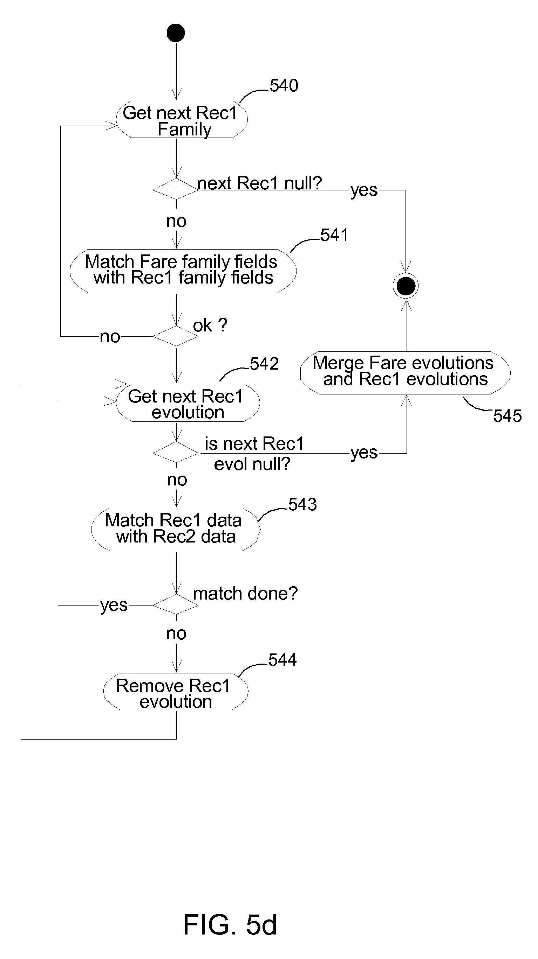

The next step (537) that merges fares and record 1 that match with record 2 data is detailed in FIG. 5d.

Then, a filtering of dates is carried out at step (538). Because fares and record 1 have their own evolution over time (fares and constraints change at specified dates) only the dates matching with the record 2 are kept. All remaining fares are added to the list of retrieved net fares (539).

FIG. 5d shows details of step (537) from previous figure which is aimed at merging fares and record 1.

First, this step first searches among the record 1 families (540) the one that matches (541) with the fare currently considered. Matching is done on the basis of following fields: locations 1 and 2, one-way/round trip, footnote and routing.

Then, for the record 1 retained, each evolution of the record 1 (542) which matches with the fare type code, season type and day of week fields of the record 2 sequence is kept (543). All others are removed (544).

After which, the evolutions of the association fare-record 1 are actually built by merging the evolutions of the fare with the evolutions of the record 1 while keeping the information of the record 1 that needs to be send back to the client (545).

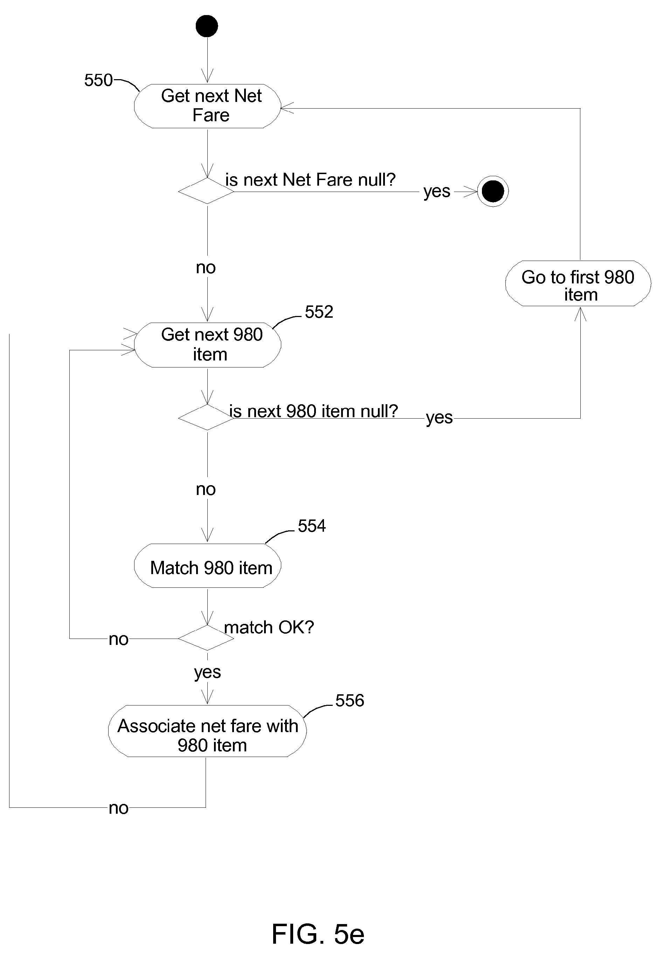

FIG. 5e describes the association of net fares with the items of the current table 980. This process is performed on the client side of the mark-up and distribution application.

Each net fare (550) that has been retained as a result of the execution of the previous selection process is compared to each item (552) of the current table 980. The process ends when all net fares have been exhaustively compared to each item of the table 980. Matching with the items of the table 980 (554) is performed on following fields: locations 1 and 2, directionality, fare class, season type, day of week, fare type code, currency and dates. Net fares that match are associated with the corresponding table 980 item (556).

FIG. 6 shows exemplary windows displayed by the client application of the mark-up and distribution module.

In the entry window of the application (600) the agency selling records (table 980) to be reviewed are identified with a sequence number (610). For each of them the selling updater may request the application to retrieve and display the corresponding market by clicking on the appropriate button (620).

Then, window is updated with a proposed default set of search criteria (630) as discussed in FIG. 4. Optionally, the selling updater can change them to narrow the search (restrict market) in order to limit the amount of data to be retrieved. In the example of FIG. 6 the default market to search is between London (UK) and Australia, for both directions in full-fare economy class (Y).

Then, upon request of the selling updater, the list of city pairs concerned are retrieved, as explained in FIG.4 and FIG. 5a, and displayed (640). In this example all city pairs from London to Australian cities are listed by their IATA (international air transport association) codes, e.g.: LON for LONDON, SYD for Sydney, etc. From this window (640) all city pairs that the selling updater does not want to consider can be optionally deselected to further limit the amount of net fares to retrieve.

Once done, the selling updater can finally request (650) the display of the net fares corresponding to the market addressed by the agency selling record considered (660). Display includes all the necessary information (rules, restrictions, etc.) so that the selling updater can proceed and mark-up the net fare. Optionally, the selling updater can also request a further filtering of the displayed market data by entering options among a predetermined list of filtering options (665).

## Claims

1. A method of applying a mark-up to net fares from agency selling records (122) received by a selling updater (400) and referring to the net fares, the method **characterized in that** it includes:
upon request of the selling updater (410),
enabling the display of market data corresponding to the agency selling record, the enabling step further comprising:
first requesting a list of city pairs (420) to be built on the basis of default search criteria;
retrieving from a fares database (406) city pairs matching the default search criteria (424); and,
returning to the selling updater the requested list of city pairs (432);
after the selling updater has selected some or all city pairs of the list (434),
further requesting a list of net fares for the selected city pairs (440);
retrieving from the fares database net fares for the selected city pairs (444);
retrieving from a rules database (450) rule records for the retrieved net fares;
associating the rule records with the retrieved net fares (452);
returning to the selling updater the requested list of net fares associated with the rule records (456); and,
further associating the net fares and the rule records that match with each item of the agency selling record (458);
thereby, allowing the display of the requested market data (480) that permits the selling updater to decide on what mark-up to apply on the net fares.

2. The method of claim 1 wherein the default search criteria include: a fare class, a first location and a second location (412).

3. The method of claim 1 or 2 wherein the default criteria are possibly narrowed by the selling updater (414).

4. The method of claim 1 wherein the step of retrieving city pairs further includes detecting city pairs recently updated (426).

5. The method of claim 1 wherein the step of retrieving city pairs further includes restricting city pairs to be added to the list retrieved city pairs (428).

6. The method of claim 1 wherein the step of retrieving net fares further includes restricting net fares to be added to the list of retrieved net fares (454).

7. The method of claim 1 and claim 4 wherein the display of market data for city pairs recently updated is highlighted.

8. The method of claim 1 wherein the display of market data is optionally further filtered (665).

9. The method of claim 8 wherein the optional filtering of the displayed market data is made on the basis of a predetermined set of filtering options to be filled by the selling updater (665).

10. A client application (355) of a computer program product stored on a computer readable storage medium, comprising computer readable code means for causing at least one computer (240, 250) to operate the method of applying a mark-up to a net fare according to any one of the claims 1 to 9.

11. The client application of claim 10 including a graphical user interface (GUI), wherein the GUI is adapted to allow an end-user of the client application to request a display of market data (620) corresponding to an agency selling record (610); the GUI further including:
means adapted for first requesting a display of a list of city pairs (630);
means adapted for selecting some or all city pairs of the list (640);
means adapted for further requesting a display of a list of net fares (650); and,
means adapted for further filtering the display of the list of net fares (665).

12. A server application of a computer program product stored on a computer readable storage medium, comprising computer readable code means for causing at least one computer (220, 210) to operate the method of applying a mark-up to a net fare according to any one of the claims 1 to 9.
